# EUROPEAN PATENT SPECIFICATION

(11) **EP 1 187 372 B1**
(45) Date of publication and mention of the grant of the patent: **13.07.2005**
(21) Application number: 01120810.5
(22) Date of filing: 29.08.2001
(51) Int. Cl.: H04B 10/148, H04B 10/158

(54) **Apparatus and method for bit rate control of optical receiver**
Optische Empfänger mit Einrichtung und Verfahren zur Steuerung der Bitrate
Récepteur optique avec moyens et méthode de contrôle du débit de bits

(30) Priority: 05.09.2000 KR 2000052475
(43) Date of publication of application: 13.03.2002
(73) Proprietor: SAMSUNG ELECTRONICS CO., LTD., Suwon-City, Kyungki-do (KR)
(72) Inventor: Kim, Chan-Youl, c/o Samsung Electronics Co.,Ltd., Suwon-city, 442-370, Kyungki-do (KR); Oh, Yun-Je, c/o Samsung Electronics Co.,Ltd., Suwon-city, 442-370, Kyungki-do (KR); Park, Tae-Sung, c/o Samsung Electronics Co.,Ltd., Suwon-city, 442-370, Kyungki-do (KR); Choi, Jeong-Seok, c/o Samsung Electronics Co.,Ltd., Suwon-city, 442-370, Kyungki-do (KR)
(74) Representative: Grünecker, Kinkeldey, Stockmair & Schwanhäusser Anwaltssozietät

(56) References cited:
- EP-A- 0 342 010
- EP-A- 0 580 317
- EP-A- 0 878 926
- EP-A- 0 910 192
- US-A- 5 138 633
- JAE HO SONG ET AL: "DESIGN AND CHARACTERIZATION OF A 10 GB/S CLOCK AND DATA RECOVERY CIRCUIT IMPLEMENTED WITH PHASE-LOCKED LOOP" ETRI JOURNAL, ELECTRONICS AND TELECOMMUNICATIONS RESEARCH INSTITUTE, TAEJON, KR, vol. 21, no. 3, September 1999 (1999-09), pages 1-5, XP001029550 ISSN: 1225-6463

## Description

The present invention relates to an optical communication system, and more particularly to an optical receiver of an optical cross-connect device.

In an optical communication system, an optical cross-connect device is installed at an intermediate node connecting an upper node, such as a central base station, and a lower node, such as a subscriber, with each other. Such an optical cross-connect device has important functions to optimize traffic on an optical network and the growth of the network while improving an abnormal congestion and survivability of the network, in addition to basic functions for transfer and allocation of channel signals. In particular, an optical cross-connect device used in a wavelength division multiplexing (WDM) system includes a demultiplexer, an optical receiver, a cross-connect switch, a controller, an optical transmitter, and a multiplexer.

Meanwhile, diverse transfer formats, called "protocols", are applied to optical communication systems. Transfer of information may be carried out at different bit rates in accordance with different transfer formats, respectively. As representative transfer formats, there are SDH/SONET (Synchronous Digital Hierarchy/Synchronous Optical NETwork), FDDI (Fiber Distributed Data Interface), ESCON (Enterprise Systems CONnectivity), optical fiber channel, gigabit Ethernet, and ATM (Asynchronous Transfer Mode), which may have diverse bit rates of, for example, 125 Mb/s, 155 Mb/s, 200 Mb/s, 622 Mb/s, 1,062 Mb/s, 1.25 Gb/s, and 2.5 Gb/s, respectively.

Conventional optical receivers are provided with a programmable clock/data reproducing circuit so that they are applicable to protocols of different bit rates. The programmable clock/data reproducing circuit reproduces data and clocks of an input optical signal, based on a reference clock determined on the basis of the bit rate of the input optical signal discriminated from a DC level generated based on signals respectively amplified and delayed from the input optical signal.

However, such conventional optical receivers involve a problem in that there may be an erroneous bit rate determination or damage to data due to the influence of temperature on circuits for amplifying and delaying the input optical signal, thereby resulting in a degradation in the reliability of the associated optical receiver.

EP-A-0580317 suggests an optical sub-system like a regenerator which includes an embedded micro-controller for providing continuous monitoring and adjusting of various operating parameters associated with the sub-system as a function of changes in the environment, for example the ambient temperature. The micro-controller is initially programmed during environmental testing in manufacture to provide a memory within the micro-controller which includes values for a pre-selected set of operating parameters as a function of various environmental conditions.

EP-A-0910192 relates to a clock extraction circuit for extracting a clock signal, which furnishes the discrimination timing of a data signal, from the data signal, comprising a timing extraction unit for extracting the clock signal from the data signal, and a slicer amplifier for varying slice level to improve the duty of the data signal, wherein the data signal is input to the timing extraction unit via the slicer amplifier. By varying the slice level of the slicer amplifier, the duty of the output data signal can be changed.

It is, therefore, the object of the invention to provide an improval bit rate control apparatus and method of an optical receiver, which is capable of avoiding an erroneous determination of the bit rate occurring under the influence of temperature.

The object is solved by the subject matter of the independent claims. Preferred embodiments of the present invention are defined by the dependent claims.

The above object and advantages of the present invention will become more apparent by describing in detail preferred embodiments thereof with reference to the attached drawings in which:
Fig. 1 is a block diagram illustrating a bit rate control apparatus of an optical receiver in accordance with a preferred embodiment of the present invention; and
Fig. 2 is a flow chart illustrating a bit rate control method of an optical receiver in accordance with a preferred embodiment of the present invention.

Now, preferred embodiments of the present invention will be described in detail, with reference to the annexed drawings. In the following description, a variety of specific elements such as constituent elements are described. The description of such elements has been made only for a better understanding of the present invention. Those skilled in the art will appreciate that various modifications, additions, and substitutions to the specific elements are possible.

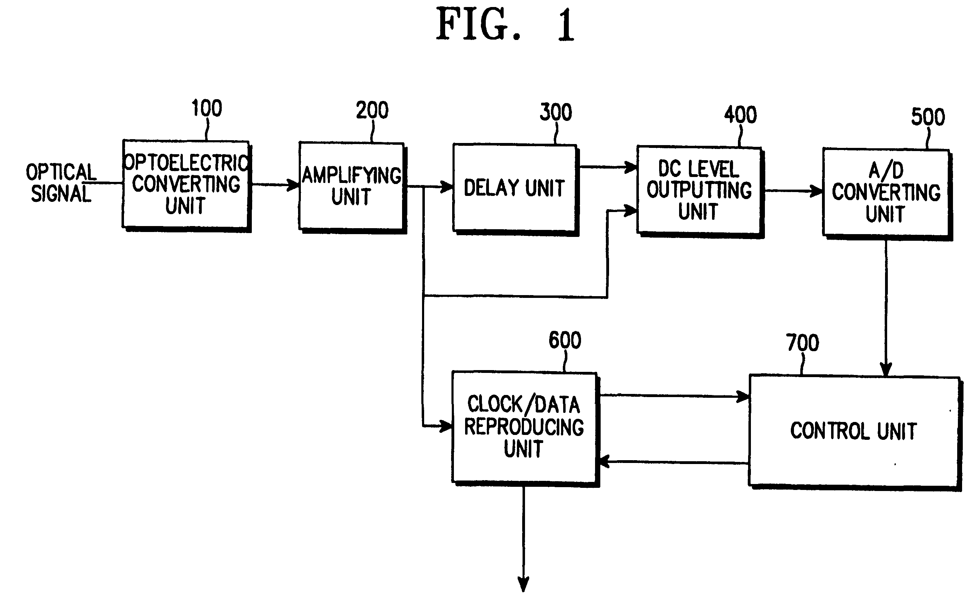

Fig. 1 is a block diagram illustrating a bit rate control apparatus of an optical receiver in accordance with a preferred embodiment of the present invention. As shown in Fig. 1, the optical receiver, which includes the bit rate control apparatus of the present invention, includes an optoelectric converting unit 100, an amplifying unit 200, a delay unit 300, a DC level outputting unit, an A/D converting unit 500, a clock/data reproducing unit 600, and a control unit 700.

The optoelectric converting unit 100 converts an input optical signal into an electrical signal. The amplifying unit 200 amplifies the electrical signal outputted from the optoelectric converting unit 100 at a desired amplification rate.

The delay unit 300 delays the signal outputted from the amplifying unit 200 by a predetermined delay time.

The DC level outputting unit 400 exclusively ORs the output signal from the amplifying unit 200 with the delayed signal from the delay unit 300, and outputs the resultant signal in the form of a DC level. That is, the DC level outputting unit 400 conducts a low-pass filtering operation for the signal, generated in accordance with the exclusive ORing, thereby outputting the DC level of the processed signal.

The A/D converting unit 500 conducts an A/D conversion for the DC level outputted from the DC level outputting unit 400.

The clock/data reproducing unit 600 receives the output signal from the amplifying unit 200, and reproduces clocks and data based on a reference clock generated in response to a bit rate control signal outputted from the control unit 700. That is, the clock/data reproducing unit 600 conducts re-shaping, re-generation, and re-timing operations for the signal received therein, based on the reference signal.

The control unit 700 calculates a variation in the DC level at every interrupt timing, previously set, based on the A/D converted signal. Thereafter, the control unit 700 determines, based on the difference of the calculated DC level variation from a predetermined variation limit, whether the DC level variation occurs under the influence of temperature or due to a variation in bit rate. Based on the result of the determination, the control unit 700 then outputs a corresponding bit rate control signal. When the DC level variation is less than or equal to the predetermined variation limit, the control unit 700 determines the DC level variation occurs under the influence of temperature. On the other hand, where the DC level variation is more than the predetermined variation limit, the control unit 700 determines the DC level variation to result from a variation in bit rate.

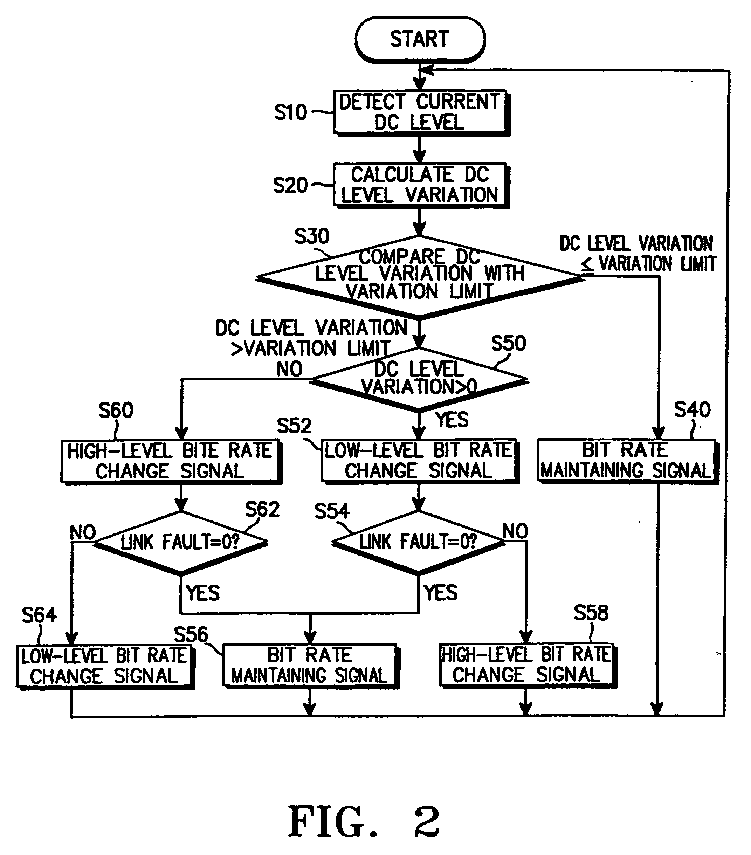

Fig. 2 is a flow chart illustrating a bit rate control method of an optical receiver in accordance with a preferred embodiment of the present invention. As shown in Fig. 2, this bit rate control method involves a current DC level detecting step (Step S10), a DC level variation calculating step (Step S20), a DC level variation/variation limit comparing step (Step S30), a bit rate maintaining signal outputting step (Step S40), a DC level variation determining step (Step S50), and a bit rate change signal outputting step (S52 and S60).

In the current DC level detecting step S10, the current DC level is detected from the signal outputted from the A/D converting unit 500.
In the DC level variation calculating step S20, a DC level variation is calculated. This calculation is achieved by calculating a difference between the current DC level detected in the current DC level detecting step S10 and the previous DC level stored in a memory.

In the DC level variation/variation limit comparing step S30, the DC level variation calculated in step S20 is compared with a predetermined variation limit. The variation limit is used as a reference for determining whether or not the DC level variation occurs under the influence of temperature or due to an actual bit rate variation. This variation limit is determined, taking into consideration interrupt timing, a DC level variation occurring under the influence of temperature according to the interrupt timing, and a minimum DC level variation resulting from an actual bit rate variation. Where the interrupt timing is set to 0.5 second, the DC level variation occurring under the influence of temperature corresponds to a maximum of 1 digit. In this case, the DC level variation resulting from an actual bit rate variation corresponds to a minimum of 3 digits. In this case, therefore, the variation limit may be set to an intermediate value of 1 digit and 3 digits, that is, 2 digits.

The bit rate maintaining signal outputting step S40 is a step of maintaining the current bit rate when it is determined in the DC level variation/variation limit comparing step S30 that the DC level variation is not more than the variation limit. That is, the DC level variation less than or equal to the variation limit represents the fact that the DC level variation does not result from an actual bit rate variation, but results from a DC level variation occurring under the influence of temperature. In this case, therefore, a bit rate maintaining signal for maintaining the current bit rate is outputted.

Where it is determined in the DC level variation/variation limit comparing step S30 that the DC level variation is more than the variation limit, it is determined in the DC level variation determining step 50 whether or not the DC level variation is more than 0. That is, the DC level variation more than the variation limit represents the fact that the DC level variation results from an actual bit rate variation. In this case, therefore, it is necessary to perform a desired bit rate change. Accordingly, it is determined whether the DC level variation has a positive value or a negative value.

The bit rate change signal outputting step involves step S52 of outputting a low-level bit rate change signal when it is determined in the DC level variation determining step 50 that the DC level variation is more than 0, and step S60 of outputting a high-level bit rate change signal when it is determined that the DC level variation is not more than 0.

Following steps S52 and S60 of outputting low and high-level bit rate change signals, link fault determining steps S54 and S62 are executed, respectively, in which it is determined, based on a PLL (Phase Locked Loop) locking signal from the clock/data reproducing unit 600, whether or not there is generated a link fault, that is, a link fault having a zero value. If it is determined in either step S54 or S62 that a link fault having a zero value is generated, the procedure then proceeds to a bit rate maintaining signal outputting step S56. If not, the procedure proceeds to a high-level bit rate change signal outputting step S58 or a low-level bit rate change signal outputting step S64, following an associated one of steps S54 and S62.

As apparent from the above description, the present invention provides a bit rate control apparatus and method of an optical receiver, in which it is determined whether a detected variation in DC level occurs under the influence of temperature or due to an actual variation in bit rate, in order to perform a desired bit rate change procedure only when the detected DC level variation results from an actual variation in bit rate. Accordingly, it is possible to avoid an erroneous determination of the bit rate occurring under the influence of temperature, thereby achieving an improvement in the reliability of the optical receiver.

## Claims

1. A bit rate control apparatus of an optical receiver comprising:
a delay unit (300) for delaying an input signal received in the optical receiver in an optoelectrically-converted state;
a DC level outputting unit (400) for receiving the input signal and the delayed signal and for outputting a signal, based on the received input and delayed signals, in the form of a DC level;
an A/D converting unit (500) for A/D converting the DC level output from the DC level outputting unit; and
a control unit (700) for detecting the current DC level from the A/D converted DC level output from the A/D converting unit;
**characterized in that**
the control unit (700) further comprises means for calculating, as a DC level variation, at every previously set interrupt timing a difference between the current DC level and a stored previous DC level, means for determining whether the calculated DC level variation is more than a predetermined variation limit, and means for outputting a bit rate control signal based on a result of the determination.

2. The bit rate control apparatus according to claim 1, wherein the DC level outputting unit (400) comprises:
a calculating unit for exclusively ORing the input signal with the delayed signal, thereby outputting a bit rate recognizing signal, and
a filter for receiving the bit rate recognizing signal and for low-pass filtering the received bit rate recognizing signal, thereby outputting the DC level.

3. The bit rate control apparatus according to claim 1 or 2, wherein the variation limit is set to 2 digits under a condition in which the interrupt timing is set to 0.5 seconds.

4. The bit rate control apparatus according to any of claims 1 to 3, further comprising a clock/data reproducing unit (600) for receiving the input signal and for reproducing the clock and data based on the bit rate control signal received from the control unit (700).

5. A bit rate control method for use in an optical receiver comprising the steps of:
delaying an input signal received in the optical receiver in an optoelectrically-converted state;
receiving the input signal and the delayed signal and outputting a signal, based on the received input and delayed signals, in the form of a DC level;
A/D converting the DC level; and
detecting (S10) the current DC level from the A/D converted DC level;
**characterized in that it further comprises the steps of**
calculating (S20), as a DC level variation, a difference between the current DC level and a stored previous DC level at every previously set interrupt timing;
comparing (S30) the DC level variation with a predetermined variation limit,
when the DC level variation is not more than the variation limit, maintaining (S40) the current bit rate;
when the DC level variation is more than the variation limit, determining (S50) whether or not the DC level variation is more than 0; and
outputting (S52) a low-level bit rate change signal when it is determined that the DC level variation is more than 0, while outputting (S60) a high-level bit rate change signal when it is determined that the DC level variation is not more than 0.

6. The bit rate control method according to claim 5, further comprising:
determining (S54, S62) whether or not there is a link fault, based on a locking signal output from the clock/data reproducing unit; and
when a link fault is determined, outputting (S56) a bit rate maintaining signal.

7. The bit rate control method according to claim 5 or 6, wherein the step of outputting a signal based on the received input and delayed signals comprises exclusively ORing the input signal with the delayed input signal, thereby outputting a bit rate recognizing signal, and further comprises low-pass filtering the bit rate recognizing signal.

8. The bit rate control method according to any of claims 5 to 7, wherein the variation limit is determined taking into consideration the interrupt timing, a DC level variation occurring under the influence of temperature according to the interrupt timing, and a minimum DC level variation resulting from an actual bit rate variation.

## Patentansprüche

1. Bitraten-Steuervorrichtung eines optischen Empfängers, die umfasst:
eine Verzögerungseinheit (300), die ein Eingangssignal, das in dem optischen Empfanger in einem optoelektrisch umgewandelten Zustand empfangen wird, verzögert;
eine Gleichstrompegel-Ausgabeeinheit (400), die das Eingangssignal und das verzögerte Signal empfängt und auf Basis des empfangenen Eingangs- und des verzögerten Signals ein Signal in Form eines Gleichstrompegels ausgibt;
eine A/D-Umwandlungseinheit (500), die A/D-Umwandlung des von der Gleichstrompegel-Ausgabeeinheit ausgegebenen Gleichstrompegels durchführt; und
eine Steuereinheit (700), die den aktuellen Gleichstrompegel aus dem A/D-Wandlung unterzogenen Gleichstrompegel, der von der A/D-Umwandlungseinheit ausgegeben wird, erfasst,
**dadurch gekennzeichnet, dass**
die Steuereinheit (700) des Weiteren eine Einrichtung, die als eine Gleichstrompegel-Änderung zu jeder zuvor eingestellten Interrupt-Zeit eine Differenz zwischen dem aktuellen Gleichstrompegel und einem gespeicherten vorhengen Gleichstrompegel berechnet, eine Einrichtung, die feststellt, ob die berechnete Gleichstrompegel-Änderung über einer vorgegebenen Änderungsgrenze liegt, und eine Einrichtung umfasst, die ein Bitraten-Steuersignal auf Basis eines Ergebnisses der Feststellung ausgibt, umfasst.

2. Bitraten-Steuervorrichtung nach Anspruch 1, wobei die Gleichstrompegel-Ausgabeeinheit (400) umfasst:
eine Berechnungseinheit, die Exklusiv-ODER-Verarbeitung des Eingangssignals mit dem verzögerten Signal durchführt und so ein Bitraten-Erkennungssignal ausgibt; und
ein Filter, das das Bitraten-Erkennungssignal empfängt und Tiefpassfiltem des empfangenen Bitraten-Erkennungssignals durchführt und so den Gleichstrompegel ausgibt

3. Bitraten-Steuervorrichtung nach Anspruch 1 oder 2, wobei die Änderungsgrenze in einem Zustand, in dem die Interrupt-Zeit auf 0,5 Sekunden eingestellt ist, auf zwei Stellen eingestellt ist.

4. Bitraten-Steuervorrichtung nach einem der Ansprüche 1 bis 3, die des Weiteren eine Takt/Daten-Reproduziereinheit (600) umfasst, die das Eingangssignal empfängt und den Takt sowie die Daten auf Basis des Bitraten-Steuersignals reproduziert, das von der Steuereinheit (700) empfangen wird.

5. Bitraten-Steuerverfahren zum Einsatz in einem optischen Empfänger, das die folgenden Schritte umfasst:
Verzögern eines Eingangssignals, das in dem optischen Empfänger in einem optoelektrisch umgewandelten Zustand empfangen wird;
Empfangen des Eingangssignals sowie des verzögerten Signals und Ausgeben eines Signals auf Basis des empfangenen Eingangs- und des verzögerten Signals in Form eines Gleichstrompegels,
A/D-Wandlung des Gleichstrompegels; und
Erfassen (S10) des aktuellen Gleichstrompegels aus dem A/D-Wandlung unterzogenen Gleichstrompegel,
**dadurch gekennzeichnet, dass** es des Weiteren die folgenden Schritte umfasst:
Berechnen (S20) einer Differenz zwischen dem aktuellen Gleichstrompegel und einem gespeicherten vorherigen Gleichstrompegel zu jeder zuvor festgelegten Interrupt-Zeit als eine Gleichstrompeget-Änderung;
Vergleichen (S30) der Gleichstrompegel-Änderung mit einer vorgegebenen Änderungsgrenze;
wenn die Gleichstrompegel-Änderung nicht über der Änderungsgrenze liegt, Beibehalten (S40) der aktuellen Bitrate;
wenn die Gleichstrompegel-Änderung über der Anderungsgrenze liegt, Feststellen (S50), ob die Gleichstrompegel-Änderung mehr als 0 beträgt oder nicht; und
Ausgeben (S52) eines Niedrigpegel-Bitratenänderungs-Signals, wenn festgestellt wird, dass die Gleichstrompegel-Anderung über 0 liegt, während ein Hochpegel-Bitratenänderungs-Signal ausgegeben wird (S60), wenn festgestellt wird, dass die Gleichstrompegel-Änderung nicht über 0 liegt.

6. Bitraten-Steuerungsverfahren nach Anspruch 5, das des Weiteren umfasst:
auf Basis eines Vemegelungssignals, das von der Takt-/Daten-Reproduziereinheit ausgegeben wird, Feststellen (S54, S62), ob ein Verknüpfungsfehler vorliegt oder nicht; und
wenn ein Verknüpfungsfehler festgestellt wird, Ausgeben (S56) eines Bitratenbeibehaltungs-Signals

7. Bitraten-Steuerungsverfahren nach Anspruch 5 oder 6, wobei der Schritt des Ausgebens eines Signals auf Basis des empfangenen Eingangs- und des verzögerten Signals Exklusiv-ODER-Verarbeitung des Eingangssignals mit dem verzögerten Eingangssignal umfasst, um so ein Bitratenerkennungs-Signal auszugeben, und das des Weiteren Tiefpassfiltem des Bitratenerkennungs-Signals umfasst.

8. Bitraten-Steuerungsverfahren nach einem der Ansprüche 5 bis 7, wobei die Änderungsgrenze unter Berücksichtigung der Interrupt-Zeit, einer Gleichstrompegel-Änderung, die unter dem Einfluss der Temperatur entsprechend der Interrupt-Zeit auftritt, und einer minimalen Gleichstrompegel-Änderung, die aus einer Ist-Bitraten-Änderung resultiert, bestimmt wird

## Revendications

1. Appareil de commande de débit binaire d'un récepteur optique comprenant :
une unité de retard (300) pour retarder un signal d'entrée reçu dans le récepteur optique dans un état transformé de manière optoélectrique ;
une unité de sortie de niveau de courant continu (DC) (400) pour recevoir le signal d'entrée et le signal retardé et pour sortir un signal, sur la base des signaux d'entrée et retardé reçus, sous la forme d'un niveau de courant continu ;
une unité de transformation analogique-numérique (A/D) (500) pour faire subir une transformation analogique-numérique à la sortie de niveau de courant continu en provenance de l'unité de sortie de niveau de courant continu ; et
une unité de commande (700) pour détecter le niveau de courant continu actuel à partir de la sortie de niveau de courant continu ayant subi une transformation analogique-numérique provenant de l'unité de transformation analogique-numérique ;
**caractérisé en ce que**
l'unité de commande (700) comprend de plus un moyen pour calculer, en tant que variation de niveau de courant continu, à chaque synchronisation d'interruption précédemment fixée, une différence entre le niveau de courant continu actuel et un niveau de courant continu précédent stocké, un moyen pour déterminer si la variation de niveau de courant continu calculée est supérieure à une limite de variation prédéterminée, et un moyen pour sortir un signal de commande de débit binaire sur la base d'un résultat de la détermination.

2. Appareil de commande de débit binaire selon la revendication 1, dans lequel l'unité de sortie de niveau de courant continu (400) comprend :
une unité de calcul pour faire subir une opération OU exclusif entre le signal d'entrée et le signal retardé, sortant de ce fait un signal de reconnaissance de débit binaire ; et
un filtre pour recevoir le signal de reconnaissance de débit binaire et pour soumettre à un filtrage passe-bas le signal de reconnaissance de débit binaire reçu, sortant de ce fait le niveau de courant continu.

3. Appareil de commande de débit binaire selon la revendication 1 ou 2, dans lequel la limite de variation est fixée à 2 chiffres sous une condition dans laquelle la synchronisation d'interruption est fixée à 0,5 seconde.

4. Appareil de commande de débit binaire selon l'une quelconque des revendications 1 à 3, comprenant de plus une unité de reproduction d'horloge / données (600) pour recevoir le signal d'entrée et pour reproduire l'horloge et les données sur la base du signal de commande de débit binaire reçu de l'unité de commande (700).

5. Procédé de commande de débit binaire à utiliser dans un récepteur optique comprenant les étapes consistant à :
retarder un signal d'entrée reçu dans le récepteur optique dans un état transformé de manière optoélectrique ;
recevoir le signal d'entrée et le signal retardé et sortir un signal, sur la base des signaux d'entrée et retardé reçus, sous la forme d'un niveau de courant continu ;
faire subir une transformation analogique-numérique au niveau de courant continu ; et
détecter (S10) le niveau de courant continu actuel à partir du niveau de courant continu ayant subi une transformation analogique-numérique ;
**caractérisé en ce qu'il comprend de plus les étapes consistant à :**
calculer (S20), en tant que variation de niveau de courant continu, une différence entre le niveau de courant continu actuel et un niveau de courant continu stocké précédent à chaque synchronisation d'interruption précédemment fixée ;
comparer (S30) la variation de niveau de courant continu à une limite de variation prédéterminée ;
lorsque la variation de niveau de courant continu n'est pas supérieure à la limite de variation, maintenir (S40) le débit binaire actuel ;
lorsque la variation de niveau de courant continu est supérieure à la limite de variation, déterminer (S50) si la variation de niveau de courant continu est supérieure à 0 ou non ; et
sortir (S52) un signal de changement de débit binaire de niveau bas quand on détermine que la variation de niveau de courant continu est supérieure à 0, et sortir (S60) un signal de changement de débit binaire de niveau haut quand on détermine que la variation de niveau de courant continu n'est pas supérieure à 0.

6. Procédé de commande de débit binaire selon la revendication 5, comprenant de plus les étapes consistant à :
déterminer (S54, S62) s'il y a ou non un défaut de liaison, sur la base d'une sortie de signal de verrouillage provenant de l'unité de reproduction d'horloge / données ; et
quand on détermine un défaut de liaison, sortir (S56) un signal de maintien de débit binaire.

7. Procédé de commande de débit binaire selon la revendication 5 ou 6, dans lequel l'étape consistant à sortir un signal sur la base des signaux d'entrée et retardés reçus comprend l'exécution d'une opération OU exclusif du signal d'entrée et du signal d'entrée retardé, sortant de ce fait un signal de reconnaissance de débit binaire, et comprend de plus le filtrage passe-bas du signal de reconnaissance de débit binaire.

8. Procédé de commande de débit binaire selon l'une quelconque des revendications 5 à 7, dans lequel la limite de variation est déterminée en prenant en considération la synchronisation d'interruption, une variation de niveau de courant continu se produisant sous l'influence de la température selon la synchronisation d'interruption, et une variation minimale de niveau de courant continu résultant d'une variation de débit binaire réelle.
